Europäisches Patentamt

European Patent Office

Office européen des brevets

(19)

(11) Publication number: **0 036 745**
**B1**

(12) **EUROPEAN PATENT SPECIFICATION**

(45) Date of publication of patent specification: **18.01.84**

(51) Int. Cl.³: **A 22 C 13/00**

(21) Application number: **81301115.2**

(22) Date of filing: **17.03.81**

(54) **Preparation of material made of collagen and foodstuff encased therein.**

(30) Priority: **17.03.80 JP 33637/80**
**17.03.80 JP 33638/80**
**17.03.80 JP 33639/80**

(43) Date of publication of application:
**30.09.81 Bulletin 81/39**

(45) Publication of the grant of the patent:
**18.01.84 Bulletin 84/3**

(84) Designated Contracting States:
**DE FR GB NL**

(56) References cited:
**FR - A - 780 123**
**GB - A - 1 107 094**
**US - A - 3 993 790**

(73) Proprietor: **KUREHA KAGAKU KOGYO KABUSHIKI KAISHA**
**9-11 Horidome-cho 1-chome Nihonbashi Chuo-ku Tokyo (JP)**

(72) Inventor: **Kato, Tadaaki**
**K-407, 3-27 Nakadai Itabashi-ku Tokyo (JP)**
Inventor: **Murayama, Naohiro**
**79-16 Aza-Suganezawa Kamata Taira Iwaki-shi Fukushima-ken (JP)**

(74) Representative: **Myerscough, Philip Boyd et al, J.A.Kemp & Co. 14, South Square Gray's Inn London, WC1R 5EU (GB)**

Courier Press, Leamington Spa, England.

## Preparation of material made of collagen and foodstuff encased therein

This invention relates to a process for preparing a material made of collagen by finely dividing refined collagen material to obtain a dispersion of collagen fibres and forming the desired material from the collagen fibres.

Shaped materials made of collagen are generally prepared by slicing a raw material made of collagen such as hide or tendon into an appropriate size, if necessary, after depilation, washing the sliced material, further cutting the material into a smaller size as required, swelling the collagen material and finely dividing the material with a grinder or the like to obtain an aqueous dispersion of collagen fibres. Shaped materials are formed from this dispersion by, for example, electrodeposition, casting or extrusion. The material obtained can be in the form of membrane, thread, film, unwoven cloth or the like.

Swelling is conventionally carried out by immersing the collagen material in an acidic or alkaline medium. It may be considered that acidic swelling is caused by hydration of basic groups on the side chain of the collagen molecule. According to this conventional method of swelling, since the degree of swelling of the collagen material is very large, many defects can occur.

When the thus swollen collagen material is mechanically stirred or broken into fibres violently in the subsequent finely dividing step, the collagen material is apt to be converted into fibrils or individual molecules as well as into fibres. The resultant aqueous dispersion of collagen fibres and fibrils has poor processability to make shaped materials because of its high viscosity and contains many fibres and fibrils thermally denatured owing to the frictional heat in the mechanical stirring or breaking during fibre formation. Furthermore, the length of fibres and fibrils in the dispersion is short and is not uniform, and films having favourable mechanical properties, particularly a high tear strength, could not be obtained.

Accordingly, the mechanical properties, particularly tear strength, have been supplemented by making a thicker film. However, when the film is employed as an edible film or casing, as the thickness of film is increased there is a tendency for unfavourable feeling in the mouth to increase. Therefore, it is not desirable to increase the thickness of film to strengthen it. The production of films which are thin and strong has been demanded.

As a process for producing a shaped material which is thin and strong, a process has been proposed wherein, after swelling a block of collagen material in an aqueous acidic medium, the swollen material is reacted with an aldehyde or is acetylated before the finely dividing step. The reaction of the collagen material with the aldehyde or the acetylating agent is intended to reduce the number of basic groups on the side chain of the collagen molecule, which may be hydrated with the acidic solution, thereby preventing excessive swelling and making it possible to obtain collagen fibres which are long and uniform in length. However, the reaction of the collagen with the aldehyde or acetylating agent is not always favourable when the desired shaped material such as a film, thread or unwoven cloth is intended to be edible, and the safety of the material should be confirmed.

It has now been found that a material made of collagen may be produced by swelling a refined collagen material in an aqueous acidic solution in the presence of a hydrophilic organic solvent. Refined collagen material is a purified collagen material which has been defatted, depilated and from which impurities have been removed. It is thus possible to prepare a material made of collagen which possesses particularly strong tear strength while containing no reaction products of the collagen material and no chemicals such as aldehydes or acetylating agents.

More precisely, the present invention provides a process for preparing a material made of collagen by finely dividing refined collagen material to obtain an aqueous dispersion of collagen fibres and subsequently forming the desired material from the collagen fibres, wherein the refined collagen material is either

A) immersed in a mixture of an aqueous acidic solution and a hydrophilic organic solvent or

B) swelled with an aqueous acidic solution followed by addition of the resultant swollen material to a hydrophilic organic solvent to control the degree of swelling of the collagen material before being finely divided.

In the present invention, water is restricted to the neighbourhood of the collagen molecules and the hydrophilic organic solvent is brought into the surroundings of the collagen molecules. Accordingly, excessive hydration or swelling of the collagen material is prevented. The regenerated collagen fibres which are finely divided after the swelling closely resemble the fibres of natural collagen material.

The amount of the hydrophilic organic solvent in the swelling step A) or B) is preferably 25 to 97% by weight of the sum of the weight of the aqueous acidic solution and the hydrophilic organic solvent. When the proportions of the hydrophilic organic solvent is less than 25%, the amount of water is so much that excessive swelling can not be avoided. On the other hand, when the proportions of the hydrophilic organic solvent is larger than 97%, a favourable dispersed state of collagen fibre cannot be obtained because of dehydration and insufficient swelling of the collagen material.

As the amount of water in the swelling step is increased, hydration proceeds further, and the collagen fibres obtained in the dispersion become finer. The amount of the organic solvent or water may be altered depending on the desired thickness and pliability of the collagen film to be prepared. In the swelling step B), water may be added to the hydrophilic organic solvent to swell the refined collagen material to the desired degree.

The acid in the aqueous acidic solution may be selected from inorganic acids such as hydrochloric acid or organic acids such as acetic acid and citric acid. The pH of the aqueous acidic solution may be adjusted to 2 to 4, preferably 2.5 to 3.8.

The hydrophilic organic solvent is an organic solvent which does not react with collagen or dissolve collagen, for instance alcohols of low molecular weight such as methanol, ethanol, n-propanol, isopropyl alcohol, ethers such as dioxane, glycols such as ethylene glycol, and ketones of low molecular weight such as acetone and methylethyl ketone. The organic solvent is easily removed from the final product during the drying step.

The material prepared from the regenerated collagen fibres which are finely divided after the swelling step has enough mechanical strength and in particular possesses a tear strength as large as material obtained by treatment with an aldehyde or acetylating agent. Furthermore, in the present invention, it has been found that the mechanical properties of the material may be enhanced by incorporating a gelatin or a soluble collagen into the shaped material. The incorporation of the gelatin or the soluble collagen is effected by adding the gelatin or soluble collagen to the mixture employed in step A), the hydrophilic organic solvent employed in step B) or the aqueous dispersion of collagen fibres obtained after finely dividing the swollen material.

The amount of the gelatin or the soluble collagen that is added is preferably in the range of 0.05 to 2 parts by weight per part by dry weight of the refined collagen material. In the case where the amount of the soluble collagen or gelatin is less than 0.05 parts by weight, the strength of the shaped material is not noticeably improved. In the case where the amount is larger than 2 parts by weight, further improvement in strength can not be realised.

The gelatin may be a commercially available gelatin or a raw gelatin obtained by roughly cutting a steer hide with a mincing machine and leaving the cut hide at 80°C for more than 24 hours. The soluble collagen may be a collagen solubilised by using an enzyme such as a protease, a collagen solubilised by the action of ultrasonic waves or a natural soluble collagen. The soluble collagen may be dissolved in the aqueous acidic solution.

The desired material of collagen may be prepared from the dispersion of collagen fibre in a known manner such as by electrodeposition, casting or extrusion, after finely dividing the refined material swollen according to step A) or step B). The final material may be any desired shape. The dispersion of collagen fibre obtained in the process of this invention shows a lower viscosity than dispersions prepared by swelling with water only, and the final material prepared according to this invention can show improved strength, particularly tear strength, even for thinner films as compared to the conventional products.

The following Examples illustrate the present invention.

Example 1

$4\times10^{-2}$ kg (40 g) (dry weight of $10^{-2}$ kg) of refined steer hide was cut into $5\times10^{-3}$ to $8\times10^{-3}$ m (5 to 8 mm) cubes and immersed into a mixed solvent consisting of $10^{-1}$ kg (100 g) of an aqueous hydrochloric acid solution of pH of 2.7 and $2.4\times10^{-1}$ kg (240 g) of ethanol for 15 hours. By adding an aqueous 65% by weight ethanolic solution to the mixture so as to make the total weight of the resultant mixture one kilogram while subjecting the mixture to a juice-mixer, an aqueous dispersion containing 1% by weight of collagen was obtained. After adjusting the pH of the dispersion to 3.2 by the addition of concentrated hydrochloric acid, the dispersion was filtered and after de-bubbling under a reduced pressure, the filtrate was subjected to film formation by the electrodeposition in which collagen fibre was deposited on the cathode by electrophoresis.

After air-drying the thus obtained membraneous film of collagen of $5\times10^{-2}\times10^{-1}$ m (5 cm $\times$ 10 cm) in size, the tear strength of the film was measured, in a wet state, by an Ermendorf tear-strength tester, the result being $1.5\times10^{-2}$ kg m/m (15.5 g cm/cm) at a thickness of $10^{-5}$ m (10 $\mu$).

On the other hand, the tear strength of a membraneous film obtained by the electrodeposition of an aqueous dispersion of the same refined material, however using only an aqueous hydrochloric acid, i.e. without using ethanol, was $8.4\times10^{-3}$ kg m/m (8.4 g cm/cm) at a thickness of $1.43\times10^{-5}$ m (14.3 $\mu$).

Example 2

$4\times10^{-2}$ Kg (40 g) (dry weight of $10^{-2}$ kg) of the same refined material as in Example 1 were immersed into $5\times10^{-4}$ m³ (500 ml) of an aqueous hydrochloric acid solution of pH of 2 for 15 hours. The thus swollen block of collagen (water content: 90% by weight) was added to $9\times10^{-1}$ kg (900 g) of acetone. This mixture was subjected to a juice-mixer to form a dispersion. After adjusting the pH of the dispersion to 3.2 by the addition of concentrated hydrochloric acid, the dispersion was filtered and after de-bubbling under a reduced pressure, the filtrate was subjected to film-formation by electrodeposition as in Example 1.

Tear strength of the thus obtained membraneous film was $2.53 \times 10^{-2}$ kg m/m (25.3 g cm/cm) at a thickness of $1.75 \times 10^{-5}$ m (17.5 $\mu$).

On the other hand, the tear strength of a film obtained by electrodeposition of a dispersion prepared from the same refined material, however using only an aqueous hydrochloric acid, was $1.75 \times 10^{-2}$ kg m/m (17.5 g cm/cm) at a thickness of $1.86 \times 10^{-5}$ m (18.6 $\mu$).

## Example 3

After immersing $4 \times 10^{-2}$ kg (40 g) (dry weight of $10^{-2}$ kg) of the same refined material as in Example 1 in a mixture of $7 \times 10^{-1}$ kg (700 g) of ethanol and $2.6 \times 10^{-1}$ kg (260 g) of an aqueous hydrochloric acid solution of pH of 2.5 for 15 hours, $10^{-2}$ kg (10 g) of a dried product of a collagen solubilised by an enzyme was added. A film of collagen was obtained by the method as in Example 1. The tear strength of the air-dried film in a wet state was $3.22 \times 10^{-2}$ kg m/m (32.2 g cm/cm) at a thickness of $1.1 \times 10^{-5}$ m (11.0 $\mu$) as measured by an Ermendorf tear strength tester.

On the other hand, the tear strength of a film prepared from the same refined material, however without adding the solubilised collagen, was $1.85 \times 10^{-2}$ kg m/m (18.5 g cm/cm) at a thickness of $1.15 \times 10^{-5}$ m (11.5 $\mu$) in a wet state.

For reference, the solubilised collagen used herein was obtained by solubilising the same refined material of the present example with "Pronase" (a proteolytic enzyme manufactured by Kaken Chem. Co., Japan) at pH of 9.

## Example 4

The same anount of the same refined material as in Example 1 was immersed into $5 \times 10^{-4}$ m³ (500 ml) of an aqueous hydrochloric acid solution of pH of 2 for 15 hours to obtain an acid-swollen refined collagen material with a moisture content of 90% by weight as in Example 2. The thus obtained refined collagen material and $3 \times 10^{-3}$ kg (3 g) of a dried product of a collagen solubilised by ultrasonic waves were added to a mixture of $8.5 \times 10^{-1}$ kg (850 g) of acetone and $5 \times 10^{-2}$ kg (50 g) of water. A membrane of collagen was obtained by the method of Example 2. The tear strength of the membrane was $4.0 \times 10^{-2}$ kg m/m (40.0 g cm/cm) in a wet state at a thickness of $1.5 \times 10^{-5}$ m (15.0 $\mu$).

On the other hand, a membrane obtained in the same manner from the same refined material as above, however without adding the collagen solubilised by ultrasonic waves, showed a tear strength of $2.95 \times 10^{-2}$ kg m/m (29.5 g cm/cm) at a thickness of $1.7 \times 10^{-5}$ m (17.0 $\mu$).

For reference, the collagen solubilised by ultrasonic waves was obtained by subjecting the refined material of Example 1 dispersed in an aqueous hydrochloric acid solution of pH of 3.3 for one hour while keeping the dispersion in iced water to ultrasonic wave for 2 hours.

## Example 5

After dispersing the refined collagen material by the method of Example 3, $10^{-2}$ kg (10 g) of a dried product of a collagen solubilised by the enzyme used in Example 3 was added to the dispersion. Then a membrane was obtained by the method of Example 1. The tear strength of the membrane at a wet state was $3.0 \times 10^{-2}$ kg m/m (30.0 g cm/cm) at a thickness of $1.05 \times 10^{-5}$ m (10.5 $\mu$).

On the other hand, the tear strength of a membrane prepared from the same refined material, however without adding the solubilised collagen, was $1.95 \times 10^{-2}$ kg m/m (19.5 g cm/cm) at a thickness of $1.2 \times 10^{-5}$ m (12.0 $\mu$).

## Example 6

After dispersing the refined collagen material by the same method as in Example 4, $3 \times 10^{-3}$ kg (3 g) of a collagen solubilised by ultrasonic waves as in Example 4 were added to the dispersion. A film of collagen was obtained by the method of Example 1. The tear strength of the membrane was $3.5 \times 10^{-2}$ kg m/m (35.0 g cm/cm) in a wet state at a thickness of $1.25 \times 10^{-5}$ m (12.5 $\mu$).

On the other hand, a membraneous film obtained in the same manner from the same refined material as above, however without adding the collagen solubilised by ultrasonic waves, showed a tear strength of $2.95 \times 10^{-2}$ kg m/m (29.5 g cm/cm) at a thickness of $1.7 \times 10^{-5}$ m (17.0 $\mu$).

## Example 7

After immersing the same amount of the same refined material as in Example 1 in a mixture of $7 \times 10^{-1}$ kg (700 g) of ethanol and $2.2 \times 10^{-1}$ kg (220 g) of an aqueous hydrochloric acid of pH of 2.5 for 15 hours, $4 \times 10^{-2}$ kg (40 g) (dry weight of $10^{-2}$ kg) of raw gelatin were added. The whole mixture was subjected to a juice-mixer to obtain a dispersion. A membrane of collagen was obtained by the same method as in Example 1. The tear strength of the obtained membrane of $5 \times 10^{-2} \times 10^{-1}$ m (5 cm × 10 cm) size was $3.1 \times 10^{-2}$ kg m/m (31.0 g cm/cm) at a thickness of $1.05 \times 10^{-5}$ m (10.5 $\mu$) by a Ermendorf tear-strength tester.

On the other hand, the tear strength of a membrane obtained from the same refined material, however without adding raw gelatin, was $1.95 \times 10^{-2}$ kg m/m (19.5 g cm/cm) at a thickness of $1.2 \times 10^{-5}$ m (12 $\mu$).

For reference, the raw gelatin used herein was obtained by roughly cutting North American steer hide with a mincing machine and leaving the cut hide at 80°C for more than 24 hours.

## Example 8

The same amount of the same refined material as in Example 1 was immersed into $5 \times 10^{-4}$ m³ (500 ml) of an aqueous hydrochloric acid solution of pH of 2 for 15 hours to obtain a swollen collagen material with a moisture content of 90% by weight as in Example 2. This material and $3 \times 10^{-3}$ kg (3 g) of dry gelatin (lot number of F—975, manufactured by Miyagi Chem. Co. Ltd., Japan) were added to a mixture of $8.5 \times 10^{-1}$ kg (850 g) of acetone and $5.0 \times 10^{-2}$ kg (50 g) of water. A membrane of collagen was obtained by the method of Example 2. The prepared membrane had a tear strength of $4.1 \times 10^{-2}$ kg m/m (41 g cm/cm) at a thickness of $1.55 \times 10^{-5}$ m (15.5 $\mu$).

On the other hand, a membrane prepared from the same refined material, however without adding gelatin, showed a tear strength of $2.75 \times 10^{-2}$ kg m/m (27.5 g cm/cm) at the thickness of $1.6 \times 10^{-5}$ m (16 $\mu$).

## Example 9

After dispersing the refined collagen material by the same method as in Example 7, $4 \times 10^{-2}$ kg (40 g) (dry weight of $10^{-2}$ kg) of raw gelatin used in Example 7 were added to the dispersion. A membrane was obtained by the method of Example 1. The tear strength of the membrane of $5 \times 10^{-2} \times 10^{-1}$ m (5 cm × 10 cm) size was $2.92 \times 10^{-2}$ kg m/m (29.2 g cm/cm) at a thickness of $9.5 \times 10^{-6}$ m (9.5 $\mu$).

On the other hand, the tear strength of a membrane obtained from the same refined material, however without adding row gelatin, was $1.85 \times 10^{-2}$ kg m/m (18.5 g cm/cm) at a thickness of $1.15 \times 10^{-5}$ m (11.5 $\mu$).

## Example 10

After dispersing the refined collagen material by the method of Example 8, $3 \times 10^{-3}$ kg (3 g) of the dry gelatin used in Example 8 was added to the dispersion. A membrane of collagen was obtained by the method of Example 1. The thus obtained membrane showed a tear strength of $3.6 \times 10^{-2}$ kg m/m (36.0 g cm/cm) at a thickness of $1.3 \times 10^{-5}$ m (13.0 $\mu$).

On the other hand, the membrane prepared from the same refined material, however without adding gelatin, showed a tear strength of $2.35 \times 10^{-2}$ kg m/m (23.5 g cm/cm) at the thickness of $1.4 \times 10^{-5}$ m (14.0 $\mu$).

## Claims

1. A process for preparing a material made of collagen by finely dividing refined collagen material to obtain an aqueous dispersion of collagen fibres and subsequently forming the desired material from the collagen fibres, characterised in that the refined collagen material is either

A) immersed in a mixture of an aqueous acidic solution and a hydrophilic organic solvent or

B) swelled with an aqueous acidic solution followed by addition of the resultant swollen material to a hydrophilic organic solvent, to control the degree of swelling of the collagen material before being finely divided.

2. A process according to claim 1, wherein the hydrophilic organic solvent is used in an amount of 25 to 97% by weight of the sum of the weight of the aqueous acidic solution and the hydrophilic organic solvent in step A) or step B).

3. A process according to claim 1 or 2, wherein the hydrophilic organic solvent is methyl alcohol, ethyl alcohol, n- or iso-propyl alcohol, ethylene glycol, dioxane, acetone or methylethyl ketone.

4. A process according to any one of the preceding claims, wherein the aqueous acidic solution is an aqueous solution of hydrochloric acid, acetic acid or citric acid.

5. A process according to any one of the preceding claims, wherein water is added to the hydrophilic organic solvent of step B) to swell the refined collagen material to the desired degree.

6. A process according to any one of the preceding claims wherein a gelatin or a soluble collagen is added to the mixture employed in step A), the hydrophilic organic solvent employed in step B), or the dispersion obtained after finely dividing the refined collagen material.

7. A process according to claim 6, wherein the soluble collagen is a collagen which has been solubilised by using an enzyme or by using ultrasonic waves or is a natural soluble collagen.

8. A process according to claim 6 or 7, wherein the gelatin or soluble collagen is added in an amount of 0.05 to 2 parts by weight per part by dry weight of the refined collagen material.

9. A foodstuff encased in a material made of collagen which has been produced by a process as claimed in any one of the preceding claims.

## Patentansprüche

1. Verfahren zur Herstellung eines Materials, das aus Collagen durch feine Zerteilung eines aufbereiteten Collagenmaterials unter Bildung einer wässrigen Dispersion von Collagen-Fasern und anschließende Bildung des gewünschten Materials aus den Collagenfasern hergestellt wurde, dadurch gekennzeichnet, daß das aufbereitete Collagenmaterial entweder A) in eine Mischung aus einer wässrigen sauren Lösung und einem hydrophilen organischen Lösungsmittel eingetaucht wird oder B) daß man es mit einer wässrigen sauren Lösung aufquellen läßt und das erhaltene aufgequollene Material einem hydrophilen organischen Lösungsmittel zusetzt, um den Grad der Quellung des Collagenmaterials zu steuern, bevor es fein zerteilt wird.

2. Verfahren nach Anspruch 1, bei dem das hydrophile organische Lösungsmittel in einer Menge von 25 bis 97 Gew.-% der Summe des Gewichts der wässrigen sauren Lösung und des hydrophilen organischen Lösungsmittels in Stufe A) oder Stufe B) verwendet wird.

3. Verfahren nach Anspruch 1 oder 2, bei dem das hydrophile organische Lösungsmittel Methylalkohol, Ethylalkohol, n- oder Iso-propylalkohol, Ethylenglykol, Dioxan, Aceton oder Methylethylketon ist.

4. Verfahren nach einem beliebigen der vorangehenden Ansprüche, bei dem die wässrige saure Lösung eine wässrige Lösung von Salzsäure, Essigsäure oder Zitronensäure ist.

5. Verfahren nach einem beliebigen der vorangehenden Ansprüche, bei dem dem hydrophilen organischen Lösungsmittel von Stufe B) Wasser zugesetzt ist, um das aufbereitete Collagen-Material im gewünschten Maße quellen zu lassen.

6. Verfahren nach einem beliebigen der vorangehenden Ansprüche, bei dem eine Gelatine oder ein lösliches Collagen der in Stufe A) verwendeten Mischung, dem in Stufe B) verwendeten hydrophilen organischen Lösungsmittel oder der Dispersion, die nach der feinen Zerteilung des aufbereiteten Collagenmaterials erhalten wird, zugesetzt wird.

7. Verfahren nach Anspruch 6, bei dem das lösliche Collagen ein Collagen ist, das unter Verwendung eines Enzyms oder unter Verwendung von Ultraschallwellen löslich gemacht wurde, oder ein natürliches lösliches Collagen ist.

8. Verfahren nach Anspruch 6 oder 7, bei dem die Gelatine oder das lösliche Collagen in einer Menge von 0,05 bis 2 Gew.-Teilen pro Gew.-Teile Trockengewicht des aufbereiteten Collagenmaterials zugesetzt wird.

9. Ein Nahrungsmittel, das in ein aus Collagen hergestelltes Material eingeschlossen ist, das nach einem Verfahren nach einem beliebigen der vorangehenden Ansprüche hergestellt wurde.

**Revendications**

1. Procédé pour préparer un matériau en collagène en divisant finement le matériau de collagène pour obtenir une dispersion aqueuse de fibres de collagène et en formant ensuite le matériau désiré à partir des fibres de collagène, caractérisé en ce que le matériau de collagène raffiné est soit:

A) immergé dans un mélange d'une solution aqueuse acide et d'un solvant organique hydrophile ou

B) gonflé en présence d'une solution acide aqueuse suivi par l'addition du matériau gonflé résultant à un solvant organique hydrophile pour contrôler le degré de gonflement du matériau de collagène avant d'être finement divisé.

2. Procédé selon la revendication 1, caractérisé en ce que le solvant organique hydrophile est utilisé à raison de 25 à 97% en poids de la somme du poids de la solution aqueuse acide et du solvant organique hydrophile dans l'étape A) ou dans l'étape B).

3. Procédé selon la revendication 1 ou 2, caractérisé en ce que le solvant organique hydrophile est de l'alcool méthylique, de l'alcool éthylique, de l'alcool n- ou isopropylique, l'éthylène glycol, le dioxane, l'acétone, ou la méthyléthylcétone.

4. Procédé selon l'une quelconque des revendications précédentes, caractérisé en ce que la solution aqueuse est une solution aqueuse d'acide chlorhydrique, d'acide acétique ou d'acide citrique.

5. Procédé selon l'une quelconque des revendications précédentes, caractérisé en ce qu'on ajoute l'eau au solvant organique hydrophile de l'étape B) pour gonfler au degré désiré le matériau de collagène raffiné.

6. Procédé selon l'une quelconque des revendications précédentes, caractérisé en ce qu'on ajoute une gélatine ou un collagène soluble au mélange utilisé dans A), le solvant organique hydrophile utilisé dans l'étape B), ou la dispersion obtenue après avoir divisé finement le matériau de collagène raffiné.

7. Procédé selon la revendication 6, caractérisé en ce que le collagène soluble est un collagène qui est solubilisé en utilisant un enzyme ou en utilisant des ondes ultrasonores ou est un collagène soluble naturel.

8. Procédé selon la revendication 6 ou 7, caractérisé en ce qu'on ajoute du collagène soluble à raison de 0,05 à 2 parties en poids par partie de poids sec du matériau de collagène raffiné.

9. Produit alimentaire enveloppé dans un matériau en collagène obtenu selon le procédé de l'une quelconque des revendications précédentes.